**Europäisches Patentamt**

**European Patent Office**

**Office européen des brevets**

(19)

(11) Veröffentlichungsnummer: **0 045 860**
**A1**

(12)

# EUROPÄISCHE PATENTANMELDUNG

(21) Anmeldenummer: **81105595.3**

(22) Anmeldetag: **16.07.81**

(51) Int. Cl.³: **F 16 D 23/12**

(30) Priorität: **09.08.80 DE 3030212**

(43) Veröffentlichungstag der Anmeldung:
**17.02.82 Patentblatt 82/7**

(84) Benannte Vertragsstaaten:
**DE FR GB IT**

(71) Anmelder: **BAYERISCHE MOTOREN WERKE Aktiengesellschaft**
**Postfach 40 02 40 Petuelring 130**
**D-8000 München 40(DE)**

(72) Erfinder: **Danicek, Karel**
**Boschetsriederstrasse 158**
**D-8000 München 70(DE)**

(74) Vertreter: **Dexheimer, Rolf**
**Bayerische Motoren Werke Aktiengesellschaft Postfach**
**40 02 40 Petuelring 130 - AJ-21**
**D-8000 München 40(DE)**

(54) **Betätigungsvorrichtung für eine Reibungskupplung eines Kraftfahrzeug-Antriebs, insbesondere eines Motorrad-Antriebs.**

(57) Die Betätigungsvorrichtung für eine Reibungskupplung eines Kraftfahrzeug-Antriebs, insbesondere eines Motorrad-Antriebs, ist mit einer in einer hohlen Getriebeeingangswelle (7) längsverschiebbaren Druckstange (8) versehen, die beim Lösen der Kupplung mit ihrem der Kupplung zugekehrten Endabschnitt über eine Druckscheibe (Tellerscheibe 9) die Zungen (10) einer Membran-Tellerfeder (6) verlagert.

Um die Druckstange (8) gut zu zentrieren, wenig Einbauraum und kleinere Ausrückwege und ein jederzeit einwandfreies und vollständiges Lösen der Kupplung zu erreichen, hat die Druckstange (8) ein über die Druckscheibe (Tellerscheibe 9) hinaus verlängertes Ende (11) und ist mit diesem Ende in einer Führungsbohrung (12) des Schwungrades (2) oder der Kurbewelle des Antriebsmotors aufgenommen.

./...

- 1 -

Betätigungsvorrichtung für eine Reibungskupplung eines Kraftfahrzeug-Antriebs, insbesondere eines Motorrad-Antriebs

Die Erfindung bezieht sich auf eine Betätigungsvorrichtung für eine Reibungskupplung eines Kraftfahrzeug-Antriebs, insbesondere eines Motorrad-Antriebs, mit einer in einer hohlen Getriebeeingangswelle längsverschieblichen Druckstange, die beim Lösen der Kupplung mit ihrem der Kupplung zugekehrten Endabschnitt über eine Druckscheibe die Zungen einer Membran-Tellerfeder axial verlagert.

Bei bekannten derartigen Betätigungsvorrichtungen ist die mit radialem Spiel in der hohlen Getriebeeingangswelle angeordnete Druckstange mit der durch die Membranfeder belasteten Druckplatte verbunden. Da die Druckplatte axial nicht exakt geführt und demnach auch nicht genau zentriert ist, wirkt die über die Druckstange übertragene Ausrückkraft in der Regel nicht zentrisch und es ergibt sich eine Schrägstellung und damit ein ungleichmäßiger Abhub der Druckplatte, was einen größeren Ausrückweg für den Kupplungsfreigang erforderlich macht. Dies vergrößert weiterhin auch in unerwünschter Weise den Ausrückweg des der Druckstange vorgeschalteten Betätigungsgestänges und somit auch beispielsweise des Handhebels am Lenker eines Motorrads.

Der Erfindung liegt die Aufgabe zugrunde, bei möglichst wenig Einbauraum und kleinerem Ausrückweg jederzeit ein einwandfreies und vollständiges Lösen der Kupplung zu ermöglichen.

Diese Aufgabe wird bei einer Betätigungsvorrichtung der vorausgesetzten Bauart dadurch gelöst, daß die Druckstange ein über die Scheibe hinaus verlängertes Ende hat und mit diesem Ende in einer Führungsbohrung des Schwungrads oder der Kurbelwelle des Antriebsmotors aufgenommen ist. Auf diese Weise ist das der Kupplung zugewandte Ende der Druckstange stets exakt zentriert, so daß ein außermittiger Kraftangriff der durch die Druckstange übertragenen Betätigungskraft in Bezug auf die Membran-Tellerfeder nicht mehr möglich ist. Es erfolgt ein stets gleichmäßiger Abhub, der in eingekuppeltem Zustand durch die Membran-Tellerfeder belasteten Druckplatte. Die Kupplung ist auch schon bei einem reduzierten Ausrückweg der Druckstange vollständig gelöst.

Vorzugsweise ist die Führungsbohrung mit einer Führungsbuchse versehen, die ihrerseits das verlängerte Ende der Druckstange aufnimmt. Zweckmäßig ist dabei die Führungsbuchse als eine Trockenlaufbuchse ausgebildet. Dies gewährt auch nach längerem Einsatz der Kupplung einen störungsfreien Betrieb, ohne daß eine eigene, im Bereich der Kupplungsreibbeläge unerwünschte Schmierung erforderlich wäre.

Bei der bevorzugten Ausführungsform ist die Druckscheibe eine mittels eines Kegelsitzes auf der Druckstange befestigte Tellerscheibe, deren äußerer Rand an den inneren Enden der Membranfeder-Zungen unter axialer Vorspannung anliegt. Die Tellerscheibe hat demnach einen vergleichsweise geringen Durchmesser, was das Massenträgheitsmoment und die Gefahr von Unwuchten verringert, wobei trotzdem eine zuverlässige und gleichmäßige Übertragung der Betätigungskraft auf die Zungen der Membranfeder ohne irgendwelchen Leerweg gewährleistet ist.

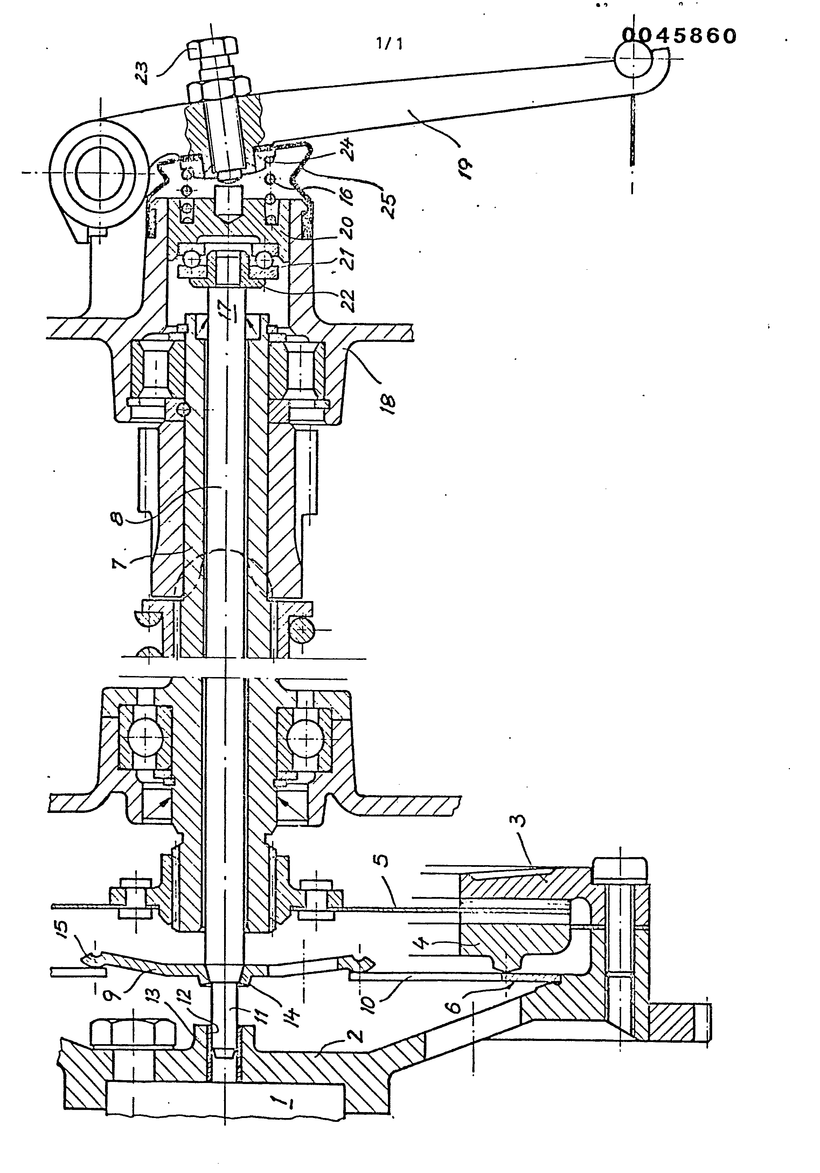

Weitere vorteilhafte Einzelheiten der Erfindung, die Gegenstand von weiteren Unteransprüchen sind, sind im folgenden anhand eines in der Zeichnung dargestellten Ausführungsbeispiels näher erläutert.

Die Zeichnung zeigt einen Schnitt durch die neue Betätigungsvorrichtung.

In der Zeichnung ist mit 1 das kupplungsseitige Ende der Kurbelwelle eines Motorrad-Motors angedeutet, mit dem das Schwungrad 2 fest verbunden ist. Das Schwungrad 2 ist ergänzt durch die mit ihm verschraubte Gegendruckplatte 3. Zwischen der Gegendruckplatte 3 und der Druckplatte 4 befindet sich die mit den Kupplungsbelägen versehene Reibscheibe 5. Im eingerückten Zustand der Kupplung belastet die sich am Schwungrad 2 mit ihrem äußeren Rand abstützende Membran-Tellerfeder 6 die Druckplatte 4 in axialer Richtung.

Zum Lösen der Kupplung ist eine in einer hohlen Getriebeeingangswelle 7 längsverschiebliche Druckstange 8 vorgesehen, mit der über die auf ihr befestigte Tellerscheibe 9 die Zungen 10 der Membran-Tellerfeder 6 axial so verlagert werden können, daß die Druckplatte 4 drucklos wird.

Die Druckstange 8 hat ein über die Tellerscheibe 9 hinaus verlängertes Ende 11, mit dem sie in einer Führungsbohrung 12 des Schwungrads 2 des Antriebsmotors aufgenommen ist. Die Führungsbohrung könnte in gleicher Weise auch in der Kurbelwelle 1 des Antriebsmotors vorgesehen werden. Wie man erkennt, ist bei dem dargestellten Ausführungsbeispiel die Führungsbohrung 12 mit einer Führungsbuchse 13 versehen, die das Ende 11 der Druckstange 8 lagert. Die Führungsbuchse 13 ist eine Trockenlaufbuchse.

Die als Druckscheibe beim Lösen der Kupplung auf die Zungen 10 der Membran-Tellerfeder 6 einwirkende Tellerscheibe 9 ist mittels eines Kegelsitzes 14 auf der Druckstange 8 befestigt. Der mit einem abgerundeten Axialwulst versehene äußere Rand 15 der Tellerscheibe 9 liegt unter axialer Vorspannung an den inneren Enden der Membranfeder-Zungen 10 an.

Die axiale Vorspannung für die Tellerscheibe 9 wird erzeugt durch eine zur Druckstange 8 koaxiale Druckfeder 16, die sich einerseits gegen das der Kupplung abgewandte Ende 17 der Druckstange 8 und andererseits gegen den schwenkbar am Getriebegehäuse 18 gelagerten Kupplungshebel 19 abstützt. Der Kupplungshebel 19 ist über einen nicht näher dargestellten Bowdenzug oder dergl. durch den am Lenker eines Motorrads vorgesehenen Handhebel betätigbar. Die Druckfeder 16 stützt sich bei dem bevorzugten Ausführungsbeispiel gegen einen im Getriebegehäuse 18 verschieblichen Kolben 20 ab, der über ein Axial-Rillenkugellager 21 unter Zwischenschaltung einer Stützbuchse 22 auf die Druckstange 8 einwirkt. Die Betätigung des Kolbens 20 erfolgt über das abgerundete Ende einer im Kupplungshebel 19 angeordneten Justierschraube 23.

Wie man in der Zeichnung ferner erkennt, belastet das dem Kupplungshebel 19 zugekehrte Ende der Druckfeder 16 einen Druckteller 24, der zwischen sich und dem Kupplungshebel 19 das eine Ende einer Dichtmanschette 25 einspannt, deren anderes Ende am Getriebegehäuse 18 dicht befestigt ist.

Die Druckfeder 16 sorgt auf diese Weise für eine schmiermitteldichte Abstützung der Dichtmanschette 25 an dem mit einer entsprechenden Anlagefläche versehenen Kupplungshebel 19. Die Druckfeder 16 stellt ferner die Rückholfeder der Betätigungsvorrichtung dar und belastet die Druckstange 8 mit einer geringen Vorspannkraft, die jeglichen Leerweg ausschließt und - über das Axial-Rillenkugellager 21 - auch das Ende 17 der Druckstange 8 in radialer Richtung ausreichend fixiert, die in ihrer gesamten Länge mit einem gewissen radialen Abstand durch die Längsbohrung der hohlen Getriebeeingangswelle 7 verläuft.

Patentansprüche:

1. Betätigungsvorrichtung für eine Reibungskupplung eines Kraftfahrzeug-Antriebs, insbesondere eines Motorrad-Antriebs, mit einer in einer hohlen Getriebeeingangswelle längsverschieblichen Druckstange, die beim Lösen der Kupplung mit ihrem der Kupplung zugekehrten Endabschnitt über eine Druckscheibe die Zungen einer Membran-Tellerfeder axial verlagert, dadurch gekennzeichnet, daß die Druckstange (8) ein über die Druckscheibe (Tellerscheibe 9) hinaus verlängertes Ende (11) hat und mit diesem Ende in einer Führungsbohrung (12) des Schwungrads (2) oder der Kurbelwelle des Antriebsmotors aufgenommen ist.

2. Betätigungsvorrichtung nach Anspruch 1, dadurch gekennzeichnet, daß die Führungsbohrung (12) mit einer Führungsbuchse (13) versehen ist.

3. Betätigungsvorrichtung nach Anspruch 2, dadurch gekennzeichnet, daß die Führungsbuchse (13) eine Trockenlaufbuchse ist.

4. Betätigungsvorrichtung nach Anspruch 1, dadurch gekennzeichnet, daß die Druckscheibe eine mittels eines Kegelsitzes auf der Druckstange (8) befestigte Tellerscheibe (9) ist, deren äußerer Rand (15) an den inneren Enden der Membranfeder-Zungen (10) unter axialer Vorspannung anliegt.

5. Betätigungsvorrichtung nach Anspruch 4, dadurch gekennzeichnet, daß zum Aufrechterhalten der Vorspannung eine zur Druckstange (8) koaxiale Druckfeder (16) vorgesehen ist, die sich einerseits gegen das der Kupplung abgewandte Ende (17) der Druckstange (8) und andererseits gegen den Kupplungshebel (19) abstützt.

6. Betätigungsvorrichtung nach Anspruch 5, dadurch gekennzeichnet, daß sich die Druckfeder (16) gegen einen im Getriebegehäuse (18) verschieblichen Kolben (20) abstützt, der über ein Axial-Rillenkugellager (21) auf die Druckstange (8) einwirkt.

7. Betätigungsvorrichtung nach Anspruch 5 oder 6, dadurch gekennzeichnet, daß das dem Kupplungshebel (19) zugekehrte Ende der Druckfeder (16) einen Druckteller (24) belastet, der zwischen sich und dem Kupplungshebel das eine Ende einer Dichtmanschette (25) einspannt, deren anderes Ende am Getriebegehäuse (18) befestigt ist.

0045860

| Europäisches Patentamt | **EUROPÄISCHER RECHERCHENBERICHT** | |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| PX | DE - A - 2 917 137 (LUK)(Offenlegungstag: 06-11-1980)<br>* Seite 28, Abbildung 1 *<br><br>-- | 1,2 |
| | DE - B - 1.042 394 (HARRY FERGUSON)<br>* Spalte 4, Abbildung 1 *<br><br>-- | 1,5,6 |
| | FR - A - 1 064 432 (A.B.G.)<br>* Insgesamt *<br><br>-- | 1,5 |
| D | DE - B - 1.530 780 (FIAT)<br>* Insgesamt *<br><br>----- | 4 |

**KLASSIFIKATION DER ANMELDUNG (Int Cl.³)**

F 16 D 23/12

**RECHERCHIERTE SACHGEBIETE (Int. Cl.³)**

F 16 D 23/00
25/00
13/00
B 62 M

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-10-1981 | BALDWIN |

EPA form 1503.1   06.78

EAD ORIGINAL